# EUROPEAN PATENT SPECIFICATION

(11) **EP 2 842 411 B1**
(45) Date of publication and mention of the grant of the patent: **31.05.2017**
(21) Application number: 14182527.3
(22) Date of filing: 27.08.2014
(51) Int. Cl.: A01F 25/20

(54) **Silage cutting head, silage collector and silage transport vehicle**
Silageschneidkopf, Silagekollektor und Silagetransportfahrzeug
Tête de coupe d'ensilage, collecteur d'ensilage et véhicule de transport de fourrage ensilé

(30) Priority: 27.08.2013 NL 2011343
(43) Date of publication of application: 04.03.2015
(73) Proprietor: Beheermaatschappij Schuitemaker B.V., 7461 AG Rijssen (NL)
(72) Inventor: Wilmink, Hermanus Gerhardus Joseph, 7461 AG Rijssen (NL)
(74) Representative: V.O.

(56) References cited:
- EP-A2- 1 712 123
- WO-A2-91/02451
- DE-A1- 3 602 403
- DE-B3-102012 004 221

## Description

### FIELD AND BACKGROUND OF THE INVENTION

The invention relates to a silage cutting head according to the introductory portion of claim 1. The invention also relates to a collector including such a cutting head and to a silage transport vehicle including such a collector.

When cutting silage from a heap, it is desired that the quality and storage life of the remaining silage in the heap is affected as little as possible and that the plant material is damaged as little as possible, since this reduces the nutritional value of the plant material. Silage block cutters perform quite well in these respects, but collection of silage in block form makes handling and processing of the silage, in particular dosing and mixing of the silage with other feed constituents, difficult. When using a rotary silage cutter or grinder (fraise) for collecting silage from a heap, the silage is obtained in a continuous stream which facilitates handling, dosing and mixing, but is conventionally associated with obtaining a relatively rough frontal face of the silage heap, with the associated detrimental effect on the quality and storage life of the remaining silage in the heap, and the plant material tends to be damaged more during collection from the heap than when cutting blocks of silage from the heap.

Already for quite some time, it has been attempted to alleviate the disadvantages associated to collecting silage from a heap using a rotary cutter. A quite early attempt is for instance disclosed in aforementioned DE 28 53 343 according to which material is cut from the silage heap along essentially a cutting line using a circulating cutting chain or a cutter with reciprocally moving cutting element as a cutting head is lowered through a front portion of the silage heap. Behind the cutter a helical rotary cutter is suspended. In operation, the rotary cutter is rotated and mills the silage from behind the cutter upwardly and over the rotary cutter while simultaneously transferring the silage scraped from the heap towards a discharge path of which an upstream end is located adjacent a downstream end of the helical rotary cutter. While a relatively smooth frontal face of the silage heap is cut, a disadvantage of such a system is that the plant material is damaged substantially which reduces the nutritional value of the silage and reduces the storage life of the silage removed from the heap.

In DE 10 2010 011 288 a silage collector is disclosed having a rotary grinder arranged behind a linear cutter and milling silage off the silage heap towards a conveyor. In this silage collector, a transverse conveyer system is arranged between the rotary grinder and a conveyor pit of a rotating arm. The transverse conveyer system laterally transfers silage supplied by the rotary grinder from a zone forming the difference between the operating width of the rotary grinder and the width of the conveyor pit. Also this apparatus for collecting silage from a heap causes the plant material to be damaged substantially, which reduces the nutritional value of the silage and reduces the storage life of the silage removed from the heap.

EP 2 127 516 discloses another attempt to alleviate the disadvantages associated to collecting silage from a heap using a rotary cutter. The cutting head is not provided with a linear cutter to obtain a smooth frontal face, but for removing the silage from the silage heap a rotary withdrawing member is equipped with a large number of teeth with a specific shape for withdrawing the silage material from the silage heap without cutting the silage material. The rotary withdrawing member has helical flanges for conveying the withdrawn silage material in axial direction towards a discharge path. Although the silage material is not cut, a disadvantage of this silage collector is that the silage left behind in a zone adjacent frontal face of the silage heap will be loosened to a relatively large extent since a substantial fraction of the plant material will have been pulled out of that zone. In spite of the reduced cutting action, the collected plant material is bruised and loosened to a large extent, so its storage life and nutritional value will be affected negatively.

In EP 1 712 123, a vehicle for removing silage is described which has a removing unit for removing silage from a stock with a boom which is pivotally supported about a pivot axis at one end and which carries a removing member at its free end. The device furthermore comprises a receptacle for removed silage, a container for removed silage and conveyor for conveying silage from the receptacle to the container. The removing member has a cutting board with a cutting blade and discharge means on the inner side thereof for discharging detached silage from the cutting board. In one example, the receptacle extends over the entire width of the vehicle and the cutting board, whilst the width of the conveyor amounts to approximately half the width of the receptacle. A cross conveyor in the form of a worm conveyor is disposed in the receptacle for supplying the silage collected in the receptacle to the conveyor in a direction perpendicular to the conveyor.

This vehicle allows silage to be removed over a large width, with relatively little damage to the plant material and leaving a relatively smooth frontal silage heap face, but its construction is complicated and occupies much space and in operation substantial quantities of silage are spilled especially under windy circumstances and when cutting relatively dry types of silage, such as haylage (45-75% dry matter) and more in particular horse haylage (55-75% dry matter) or hay.

For cutting along the sides of the silage to be cut from the heap, side cutters are provided of a design similar to that of the linear cutter extending over the width of the cutting head. Such side cutters are relatively complicated, since associated drive and transmission means are required.

A silage cutting head according to the introductory portions of claims 1 and 13 is known from DE 10 2012 004 221. The silage cutting head according to this document has side cutters in the form of knives that are rotatable together with the conveyor screw. The conveyor screw rotates in such a sense of rotation, that a section closest to the linear cutter moves upward (i.e. contrary to the downward cutting direction) for conveying silage over the screw towards the outlet of the silage cutting head. The side cutters co-operate with knives arranged at the ends of the linear cutter. In operation, these knives are stationary and a cutting effect is achieved as the cutting head is moved in downward direction. Because the knives are stationary, relatively much silage is pulled out of the heap, which results in a roughened surface leaving, especially if the knives loose sharpness. Furthermore, the knives tend to loose sharpness in critical cutting regions, because continuously the same portions of the cutting edges are subjected to wear.

### SUMMARY OF THE INVENTION

Accordingly, it is an object of the present invention to provide a solution that allows retrieving silage from a frontal face of a silage heap reliably and with simple and compact silage retrieval equipment, while obtaining a smooth frontal face of the silage heap...

According to the invention, this object is achieved by providing a silage cutting head according to claim 1. The invention can also be embodied in a silage collector according to claim 11 and in a silage collecting vehicle according to claim 12.

Because the guide surface ends laterally inwardly and closely adjacent the rotary contour of the at least one side cutter and the rotary contour of the at least one side cutter projects radially beyond at least a portion of the guide surface, a side cutter can be provided that is relatively large in radial directions, so that it reaches until close to or up to the cutting surface made or to be made by the linear cutter, while the guide surface can still extend closely along the conveyor screw to provide reliable transport of silage towards the outlet of the silage cutting head.

Because the side cutter or each of the side cutters is rotatable about an axis of rotation parallel to the axis of rotation of the conveyor screw, the side cutter can be driven in a simple manner.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a schematic side view of a first example of a silage transport vehicle according to the invention and a frontal portion of a silage heap;
Fig. 2 is a schematic top plan view of the vehicle according to Fig. 1;
Fig. 3 is a schematic side view of a front portion of a second example of a silage transport vehicle according to the invention;
Fig. 4 is a schematic perspective view of a front portion of a silage collector of the vehicle shown in Fig. 3;
Fig. 5 is a perspective view of a portion of the silage collector shown in Figs. 3 and 4 with a cutter in a raised position;
Fig. 6 is a schematic, partially cut-away perspective view of the silage collector shown in Figs. 3-5;
Fig. 7 is a schematic, partially cut-away side view of the silage collector shown in Figs. 3-6;
Figs. 8 and 9 are schematic side views of a third example of a silage transport vehicle according to the invention in different operating conditions; and
Figs. 10-12 are schematic representations of alternative linear cutters of a silage collector according to the invention.

### DETAILED DESCRIPTION

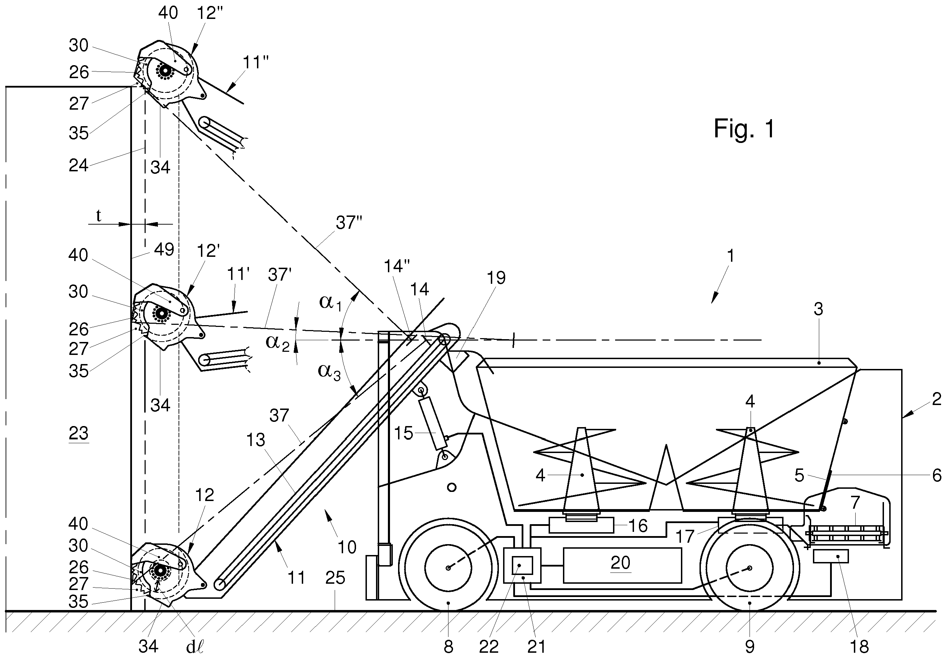

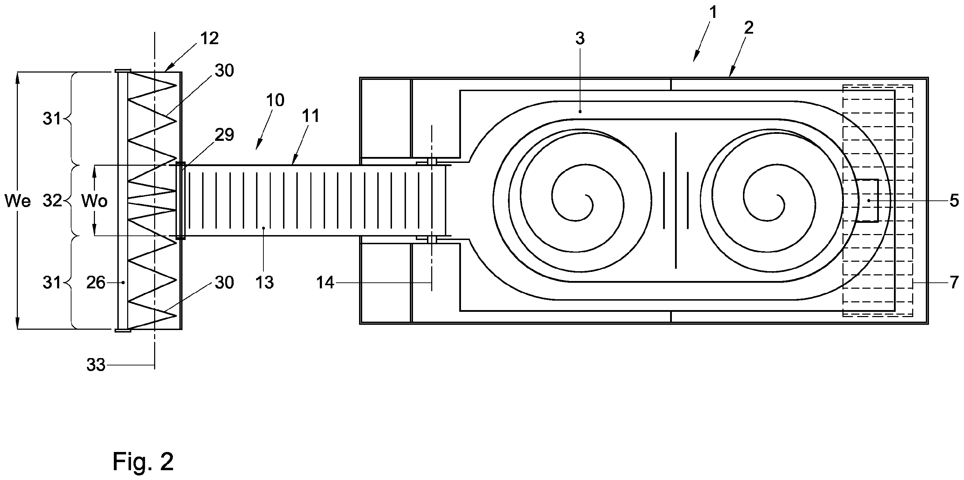

The invention is first described with reference to the example of a silage transport vehicle 1 according to the invention shown in Figs. 1 and 2.

The vehicle 1 has a vehicle body 2, carrying a receptacle 3 for receiving and holding silage to be transported. In the receptacle 3, mixing screws 4 are arranged for mixing silage and, if desired, other forage and/or food supplements. The screws 4 also urge food outwardly to a discharge port 5 of the receptacle 3, which can be closed-off by a hatch 6. A feed distribution conveyor 7 is provided for depositing feed mainly to the side of a track along which the vehicle passes. This allows distributing feed from the receptacle 3 along the length of one or more feed barriers as the vehicle 1 is driven along the feed barrier or barriers. Furthermore, the vehicle 1 has wheels 8, 9 coupled to hydraulic hub motors (not shown).

The vehicle 1 is further equipped with a silage collector 10 composed of a boom 11 pivotably mounted to the vehicle body 2 and carrying a silage cutting head 12 at is free end. The boom 11 is equipped with a silage conveyor 13 for conveying silage cut by the silage cutting head 12 from the silage cutting head 12 to the receptacle 3. In the present example, the silage conveyor is provided in the form of a circulatable conveyor belt. However, other forms of a conveyor, such as a conveyor screw, or an arrangement of circulatable brooms or paddles are also conceivable. The boom 11 is pivotable relative to the vehicle body about a pivot axis 14. For driving pivoting movement of the boom 11, a hydraulic cylinder 15 is mounted connected to the vehicle body 2 and to the boom 11 at positions spaced from the pivot axis 14.

The boom, the cutting head, the pivoting axis and a geometrical plane defined by a cutting edge of a linear silage cutter 26 of the cutting head 12 and the pivoting axis are shown in three positions 11, 11', 11"; 12, 12', 12"; 14, 14', 14" and, respectively 37, 37', 37". Parts of the cutting head and the boom in the three positions are otherwise designated by the same reference number in each of the three positions.

For energizing the hub motors, hydraulic motors 16-19 for driving the mixing screws 4, the distribution conveyor 7 and the conveyor 13 of the boom 11 and the hydraulic cylinders 15 for actuating pivoting movement of the boom 11 about the horizontal axis 13, an engine 20 and a hydraulic pump unit 21 coupled to the engine 20 are provided. The pump unit 21 is controlled by a control unit 22. The engine may for instance be a diesel engine. However, in view of the relatively short operating intervals of collecting and distributing silage, it is also possible to provide a battery and/or contact wire or rail powered electric motor. If the vehicle is electrically powered, it can be advantageous to replace some or all the hydraulic motors and actuators by electric motors and actuators.

In Fig. 1, a frontal end portion of a silage heap 23 is shown. The heap 23 has a frontal side 24 and rests on a floor 25 over which the vehicle 1 is drivable.

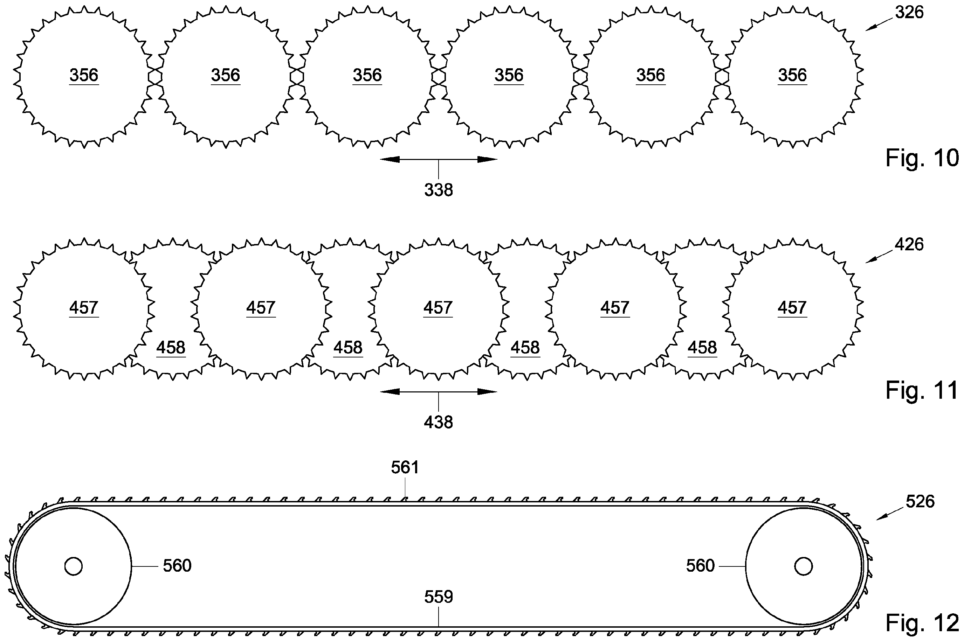

In the present example the linear silage cutter for cutting off a slice of silage from the heap along a (preferably straight) linear cut in the silage is provided in the form of a silage cutting knife 26 with teeth reciprocably movable in the longitudinal direction of an entry passage 27 of the cutting head 12. However, the linear silage cutter may also be provided in another form, such as in the form of a circulating or reciprocally moving chain or an array of cutting discs. Examples of such alternative linear cutters are shown in Figs. 10-12. In the example shown in Fig. 10, the cutting discs 356 are arranged in a single row oriented the longitudinal direction 338 of the entry passage. Rotary contours of the successive cutting discs 356 are located closely adjacent to each other with a small clearance. Preferably, all discs 356 rotate in the same sense of rotation, so a shearing action is obtained where the teeth of successive cutting discs 356 pass closely along each other. In the example shown in Fig. 11, the linear cutter 426 has a first row of cutting discs cutting discs 457 and a second row of cutting discs 458. Both rows are oriented in the longitudinal direction 438 of the entry passage. The discs 457, 458 are arranged such that each of the discs 457 of the first row overlaps the neighbouring disc or discs 458 of the second row and the discs 457, 458 of the first and second row are arranged such that the teeth move closely along and preferably in contact with each other, so that a shearing effect is achieved between the cutting edges of each pair of neighbouring discs 457, 458 of the first and second rows. In the example shown in Fig. 12, the linear cutter is in the form of a rotatable cutting belt 559 tensioned about pulleys 560 of which at least one is drivable for rotation about its axis of rotation for causing the cutting belt to circulate around the pulleys 560. The cutting belt 559 carries cutting teeth 561 for cutting the silage. Instead of a belt, a cutting chain can be provided.

The silage cutting knife 26 bounds a longitudinal side of the entry passage 27 for allowing silage being or having been sliced by the silage cutting knife 26 to pass through. The entry passage 27 is elongate and has a width wₑ in the direction of the silage cutting knife 26. Furthermore, the silage cutting head 12 has an outlet passage 29 having a width wₒ in the direction of the width wₑ of the entry passage 27, which is smaller than the width wₑ of the entry passage 27.

A lateral conveyor screw 30 of the silage cutting head 12 is oriented along the silage cutting knife 26 from zones 31 of the cutting head 12 aside of the outlet passage 29 to a zone 32 in front of the outlet passage 29, for laterally transporting portions of the sliced silage from the zones 31 of the cutting head 12 aside of the outlet passage 29 towards the outlet passage 29. In this example, the cutting head 12 has a cutting knife carrier 40 carrying the cutting knife 12.

In operation, collecting silage from a frontal face 24 of a silage heap 23 can be carried out as follows. The silage cutting head 12 is moved with vertical directional component along the front side 24 of the silage heap 23 along a path in which the silage cutting knife 26 moves closely behind the frontal face 24 of the silage heap 23, thereby slicing silage off the frontal face 24 of the silage heap 23. In the present example, the silage cutting head is moved from an upper position 12" downwards via an intermediate position 12' to a lowermost position 12. A lowermost portion of the silage at the frontal face 24 of the silage heap 23 that has not been cut by the silage cutting knife 26, when the cutting head 12 has reached its lowermost position abutting against the floor 25, can for instance be collected by pressing the cutting head 12 into the silage, causing the resiliently suspended silage cutting knife 26 to be biased backwardly relative to the conveyor screw 30 and allowing the conveyor screw 30 to scrape silage off the front face 24 of the silage heap 23.

As the silage material is being sliced, sliced silage is received in the cutting head 12 via the entry passage 27. Simultaneously, the conveyor screw 30 laterally displaces sliced silage received in the zones 31 of the silage cutting head 12 to the side of the outlet passage 29 through the silage cutting head 12 towards the outlet passage 29 and both the laterally displaced silage material and silage material that has been cut and received in front of the outlet passage 29 are displaced away from the silage cutting head 12 in a direction transverse to the silage cutting knife 26 by the silage conveyor 13.

Because the silage is laterally transported in and through the silage cutting head by a conveyor screw from outer zones of the silage cutting head to the side of the outlet passage, which is narrower than the inlet passage, on the one hand silage can be cut from the silage heap over a large width, while the sliced silage is presented for transportation away from the silage cutting head over a small width where it can be transferred directly to a relatively narrow conveyor, which accordingly occupies relatively little space and can be of a light construction. Spillage of silage due to wind or whirling is avoided, because one end of the conveyor along which the silage is transported away from the silage cutting head moves together with the boom at a free end of which the silage cutting head is mounted. Thus, the upstream end of the silage transport conveyor is always closely adjacent to the outlet passage of the silage cutting head, so the silage does not have to drop in free fall over a significant distance when transferred from the silage cutting head to the silage conveyor.

Fig. 1 further illustrates the principle of providing that the drive train including the motor 20 and the control unit 21 are arranged for controlling forward and backward displacement of the vehicle body 2 during pivoting motion of the boom 11. Preferably, such boom orientation related displacement of the vehicle body 2 is controlled in accordance with a predetermined relationship between the orientation of the boom and the position of the vehicle. However, a different approach, for instance based on monitoring and controlling the horizontal component of movement of the silage cutting head, is also conceivable, for achieving that a more vertical cut, and accordingly a more vertical face, is obtained than if the vehicle body would have been left stationary.

By moving the vehicle body backward and/or forward during pivoting movement of the boom 11 carrying the silage cutting head 12, the trajectory along which silage is sliced off the frontal face 24 of the silage heap 23 can be controlled and avoids that such a shape is limited to a circle segment having the axis of rotation 14 of the boom 11 as its centre. This allows to shape the trajectory along which silage is sliced off the frontal face 24 of the silage heap 23 such that it avoided that parts of the frontal face lean over forwardly, which increases the risk of the front face breaking down and causes accelerated deterioration of the silage, in particular of the corner portions close to the upper and the frontal face of the silage heap. Depending on the cohesion of the silage, it may be desired to further reduce the risk of collapsing by providing that the front face is leaning backwardly over substantially its entire height.

Being able to control the vertical profile (in side view) of the frontal face of the silage heap is particularly advantageous if the silage is sliced off the heap at a small cutting depth, because an even cutting depth is then easier to achieve and cohesion of the silage being cut is of particular importance when collecting the silage in relatively thin slices.

For avoiding that a forward leaning frontal face shape is obtained, it can be provided that the vehicle is displaced towards or away from the heap of silage during cutting, such that at least during an upper portion of a cutting trajectory the distance of the vehicle to the heap increases with the distance of the silage cutting knife from a top end of the frontal face of the heap.

To straighten the shape of the cutting trajectory, which further reduces exposure of the silage via the external surface area of the frontal face of the heap, it may also be provided that, during a lower portion of the cutting trajectory under the upper portion, the distance of the vehicle to the heap decreases with the distance of the silage cutting knife from a top end of the frontal face of the heap.

In the present example, the relationship between displacement of the vehicle body 2 in the driving direction and the orientation of the boom 11 is such that the silage is sliced along a straight cutting trajectory. Slicing along a straight cutting trajectory allows slicing off silage up to closely along a (usually flat) rear wall of a silage bunker. If a non vertical frontal face shape has been cut to avoid collapsing, the frontal face may gradually be shaped towards a flat vertical shape as the rear wall is approached by slicing of layers of silage, so that nevertheless the last silage can be cut closely along the flat vertical rear wall.

As is illustrated by Fig. 1, the vehicle body 2 may be in a position with the pivoting axis 14" of the boom 11" in a first position when the silage cutting head 12" is in its uppermost position, just before starting slicing off a slice of silage from the frontal face 24 of the silage heap 23. Then, as the boom 11' is lowered and the silage cutting knife 26 is slicing off silage material, the vehicle body 2 driven backward over a small distance passing a position in which the pivoting axis 14' is almost in its most rearward position, while the cutting head 12' is in the position designated by reference numeral 12'. As the boom 11 is lowered further and after a plane 37 through the cutting edge of the silage cutting knife 26 and the pivoting axis 14 passes through a horizontal orientation, the vehicle body 2 is moved forward again until the pivoting axis 14 reaches the position 14 shown in the drawing and the silage cutting head 12 has reached its lowermost position. For achieving a vertical straight cutting trajectory the backward displacement of the vehicle body should be such that the horizontal distance of the pivoting axis 14 to a desired cutting plane 49 is cos α x *l*, wherein α is the inclination of the plane 37 through the cutting edge of the silage cutting knife 26 and the pivoting axis 14 relative to the horizontal and *l* is the distance between the cutting edge of the silage cutting knife 26 and the pivoting axis 14.

The conveyor screw 30 slightly kneads the silage as it is urged towards the outlet passage 29, which facilitates further transport and processing of the laterally displaced silage together with silage that has been cut and has entered the silage cutting head 12 in front of the outlet passage and is passed through without substantial lateral displacement. In the present example, the screw conveyor extends in two zones 31 aside of the outlet passage 29 and has sections on opposite sides of the outlet passage 29 that have a left-hand and, respectively, a right-hand thread. More specifically, when seen from the vehicle body 2, the left section of the screw conveyor 30 has a left-hand thread and the right section of the screw conveyor 30 has a left-hand thread, so that silage is laterally transported towards the middle of the silage cutting head 12 when the screw conveyor is rotated about its central axis 33 in a sense of rotation in which the side of the screw conveyor 30 facing the silage cutting knife 26 moves in the direction in which the silage cutting knife 26 cuts (in the present example, the silage cutting knife 26 cuts in a downward direction).

The silage cutting head 12 further has a longitudinal edge 35 of the entry passage 27 opposite the silage cutting knife 26. The longitudinal edge 35 and the silage cutting knife 26 are positioned such that when the longitudinal edge 35 contacts the frontal face 24 of the silage heap 23, the cutting plane 49 along which the silage cutting knife 26 cuts, and which determines the thickness t at which the silage is sliced off the frontal face 24, is a distance t from the longitudinal edge 35. The distance t is smaller than the depth dl of the empty space between windings of the conveyor screw 30.

Because the silage is sliced off the frontal face of the silage heap at a relatively small thickness t in relation to the depth dl of the empty space between windings of the conveyor screw (smaller than and preferably less than 75% of the depth dl of the empty space), the slice of silage cut off the silage heap is relatively malleable and easily transportable by the conveyor screw smoothly with relatively little further cutting, drawing apart, bruising, mashing or other processing that inflicts damage upon the silage material. In particular, the silage is not processed (such as by grinding or milling) between cutting and lateral transport by the conveyor screw, which reduces wear and tear to which the plant material is exposed. Thus, damage to the plant material is reduced and the silage remains relatively compact which is favourable for storage life and maintaining its nutritional value. The effective lateral transport of the silage through the cutting head allow slicing the silage off the silage heap over a large width without needing a wide conveyor track, so that in spite of the small cutting depth, silage can be collected at a sufficiently high rate.

The cutting knife 26 is preferably oriented in relation to the cutting plane 49 such that a cutting face of the cutting knife facing the silage heap is parallel to the cutting plane 49 or leaves a clearance angle between the cutting knife 26 and the cutting plane. Thus, the cutting knife 26 presses not or only slightly against the freshly cut frontal face surface of the silage heap, which helps to avoid dislodging silage adjacent that freshly cut frontal face surface.

The silage cutting head 12 further has a guide surface with a feed in portion 34 extending from the longitudinal edge 35 of the entry passage 27 opposite the silage cutting knife 26 and leaves a space between the feed in surface 34 and an outer contour of rotation of the screw conveyor 30. A portion of that space tapers in axial view in a circumferential sense away from the longitudinal edge 35 of the entry passage 27.

In the tapering space 35 between the feed in surface 34 and the screw conveyor contour, silage material that is entrained by the screw conveyor 30 is kneaded and compressed, urged into the space between successive windings of the helical thread of the screw and, at least to a large extent, prevented from rotating along with the screw conveyor 30, so that the silage is effectively transported in the lateral direction towards the outlet passage 29.

During the downwards movement of the cutting head 12 during cutting, the lower edge 35 of the cutting head 12 bounding the silage entry passage 27 opposite the silage cutting knife 26 is moved along and in contact with the frontal face 24 of the silage heap 23, leading the silage cutting knife 26. Thus, also smaller parts of silage separated during cutting and/or during bending and breakage of the slice of silage are, at least to a large extent, prevented from falling down from between the frontal face 24 of the silage heap 23 and the silage cutting head 12, so that essentially none of the sliced silage is lost.

In the present example, the lower edge 35 of the cutting head 12 bounding the silage entry passage opposite the silage cutting knife 26 is formed by a roller, so that it can move easily over the frontal face 24 of the silage heap 23 with little or no scraping of silage off the frontal face 24 of the silage heap 23.

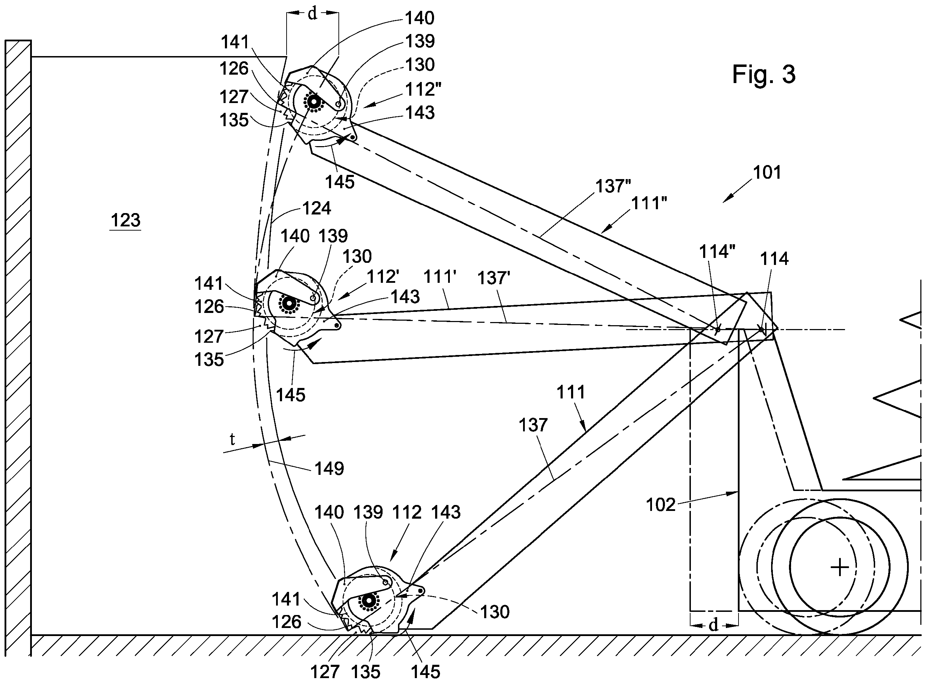

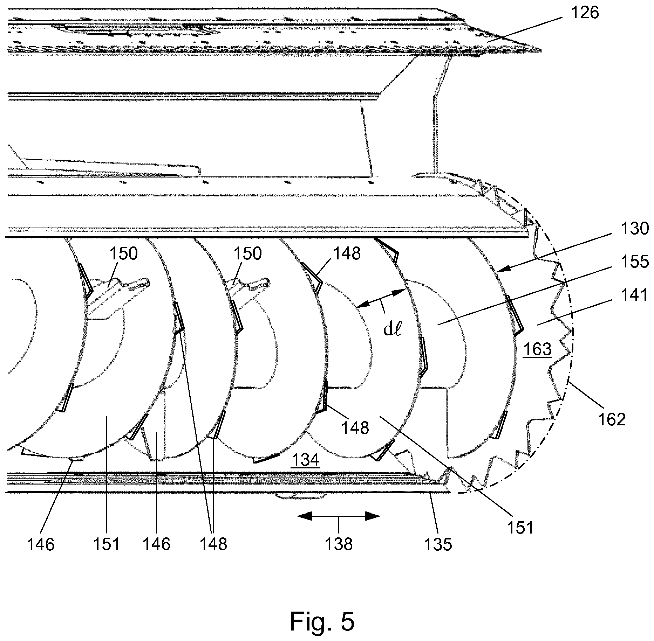

In Figs. 3-7, a second example of a silage transport vehicle 101 according to the invention is shown.

In this example, the movement of the pivoting axis 114 in driving direction as the silage cutting head is moved from a starting position 112" via an intermediate position 112' to a lowermost position by pivoting the boom 111 about its pivoting axis 114 is controlled in a more simple manner by only providing for rearward movement of the pivoting axis 114 over a distance d approximately until a plane 137 through the cutting edge of the silage cutting knife 126 and the pivoting axis 114, and 114" reaches a horizontal orientation, which reduces the extent to which an upper portion of the cutting plane 149, which determines the shape of the frontal face 124 of the silage heap 123 after cutting, leans forward after cutting. Depending on the coherence of the silage, this may be sufficient for avoiding collapsing of portions of the frontal face 124 of the silage heap 123. The forward and backward movement of the pivoting axis 114 is again achieved by moving the vehicle body 102 back and forth.

The longitudinal edge of the entry passage opposite the silage cutting knife 126 is formed by a lip 135 that is held in contact with the frontal face 124 of the silage heap 123 so that the lower end of the entry passage 127 substantially seals off against the frontal face 124 of the silage heap 123 for preventing loose silage from dropping down.

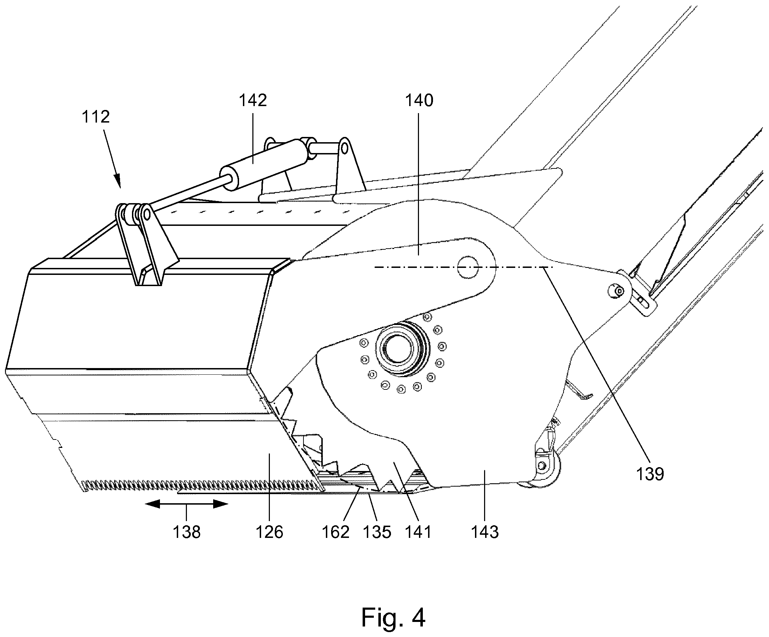

As can be seen from the successive positions of the silage cutting knife 126 in the successive positions 112", 112', 112 of the silage cutting head, the silage cutting knife 126 is displaceable relative to the longitudinal edge 135 opposite the silage cutting knife 126 in a direction perpendicular to the longitudinal direction (double arrow 138 in Figs. 4-6) of the entry passage 127. This allows the sliced off silage to be of a relatively constant thickness from irrespective whether it has been sliced off a top or a bottom portion of the silage heap.

The silage cutting knife 126 is displaceable by pivoting relative to the opposite edge 135 of the entry passage 127 about a pivot axis 139 oriented in the longitudinal direction 138 of the entry passage 127. To this end, the silage cutting knife 126 is mounted to a hood 140 that is pivotable about the pivot axis 139. The silage cutting knife 126 is of a type known as such, which is composed of two cutting blades with serrated edges that are drivable to move back and forth in an oscillating manner relative to each other in the longitudinal direction. To also separate a slice 152 of silage from the silage heap 123 along its lateral sides, the silage cutting head 112 is equipped with side cutters 141 at lateral outer ends of the entry passage 127. The side cutters 141 are each rotatable about an axis of rotation parallel to the axis of rotation of the conveyor screw 130 and defining a rotary contour 162 forming a boundary of the space through which radially and laterally most outermost portions of the side cutter 141 rotate.. In the present example side cutters 141 are provided at both lateral ends of the entry passage 127. It is however also possible, to provide that a side cutter is arranged at only one lateral end of the entry passage, for instance if the silage cutting head is to be used for cutting successive strips of silage such that each next strip to be cut is always to the right or always to the left of the previously cut strip.

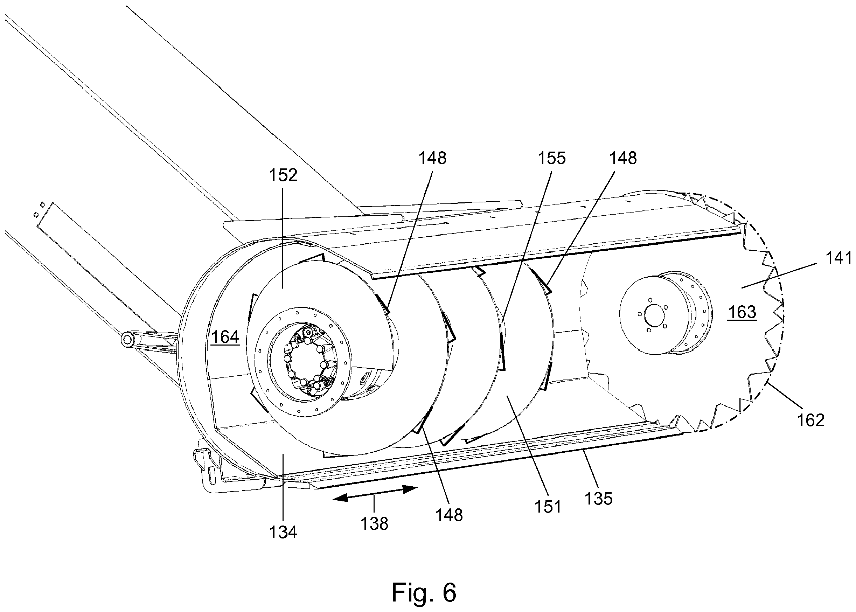

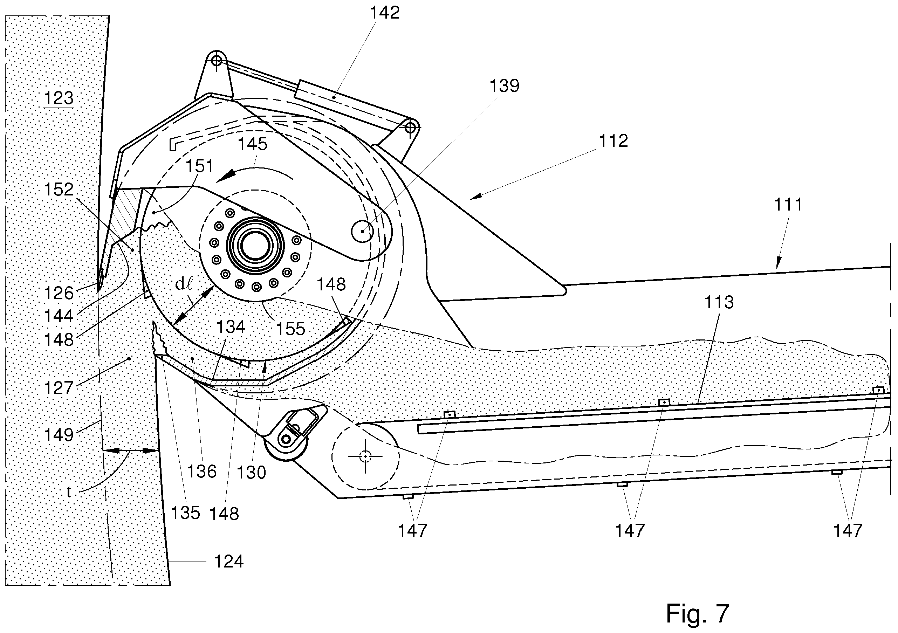

For changing the orientation of the hood 140 during silage cutting, a hydraulic cylinder 142 (see Figs. 4 and 7 not shown in Figs. 3 and 6) is provided of which one end is coupled to the hood 140 and the other end is coupled to a main part 143 of the silage cutting head 112.

The hood 140 furthermore has a silage deflection surface 144 that deflects a slice 152 of cut silage towards the screw conveyor 130. As in the other examples, the location in cutting direction and perpendicular thereto of the cutting edge of the linear cutter 126 relative to the contour of the screw conveyor 130 in side view is such that the screw conveyor does only engage silage that is part of a slice portion that has already been cut off the silage heap. Thus the silage that is engaged by the screw conveyor has been severed from the silage heap in a relatively thin slice and accordingly been made more kneadable and more easily entrainable by the threads 151 of the conveyor screw 130.

The deflecting surface 144 is oriented at an angle of deflection of at least 25°, and preferably at least 30°, relative to the cutting plane 149 or to an adjacent surface portion of the linear silage cutter 126 and has an upstream end in cutting direction located upstream of the axis of rotation of the screw conveyor 130 for, in operation, deflecting sliced silage towards the screw conveyor 130 from an area upstream of the axis of rotation of the screw conveyor 130. As is best seen in Fig. 7, deflected silage is urged towards the screw conveyor 130. Partially the deflected silage drops down onto and in front of the screw conveyor 130 and partially the silage is urged between the successive windings of the treads 151 of the screw conveyor 130. The lip 135 in contact with the frontal face 124 of the silage heap 123 prevents silage from dropping down out of the silage cutting head 112 so that spilling of silage is substantially avoided (especially under unfavourable circumstances spilling may not be avoided completely).

Since the opposite edge 135 of the entry passage 127 is positioned relative to the conveyor screw 130 such that, during silage cutting, the opposite edge 135 is closer to the silage heap 123 than the conveyor screw 130, the conveyor screw 130 does not reach beyond the frontal face 124 of the silage heap 123 and can only engage silage that has been sliced off the silage heap by the cutting knife 126, so it can be moved laterally relatively easily and deformed to the extent necessary to be entrained by the screw conveyor, while subjecting the silage material to relatively little strain.

The screw conveyor 130 rotates in a sense of rotation 145 so that a segment of the screw conveyor 130 facing the silage cutting knife moves downwards, i.e. in the cutting direction of the silage cutting knife 126. As in the present example, the screw conveyor 130 preferably has projections, such as teeth 148, for instance distributed over the circumference of its outer edge or edges at an angular pitch of 90° to 180°. These projections ensure that the sliced silage is initially entrained to some extent in circumferential sense of the screw conveyor, so that it is urged into the spacing(s) between successive windings of helical thread(s) of the screw conveyor.

The screw conveyor is arranged in a chamber bounded by a wall having an inner guide surface 164 extending relatively around the outer rotary contour of the screw conveyor 130. A portion of the guide surface 164 forms a feed in surface 134 extending from the edge bounding the entry passage opposite the silage cutting knife 126 and the outer rotary contour of the screw conveyor 130, a tapering space 136 is left in which the sliced silage that is entrained by the conveyor screw is gradually fed into the spacing(s) between successive windings of helical thread(s) of the screw conveyor and causing it to be on the one hand effectively engaged by the screw conveyor 130 but, on the other hand, to some extent, refrained from circulating along with the rotation of the screw conveyor 130. Thus, silage cut and deflected in the zones to the side of the outlet passage 129 is effectively transported in axial direction of screw conveyor 130 towards the outlet passage 129, while moving along screw conveyor guide surfaces 164 contiguous with the feed in surface 134 bounding the tapered space 136. The screw conveyor guide surfaces 164 end at the lateral boundaries of the outlet passage 129. When laterally transported silage reaches the zone in front of the outlet passage 129, it is expelled from the silage cutting head 112 in a stream together with silage cut and deflected in the zone in front of the outlet passage 129. The stream has a width equal to or smaller than the width of the silage conveyor 113, which is substantially narrower than the entry passage 127 of the silage cutting head 127. Accordingly, silage can be sliced off the frontal face 124 of the silage heap 123 over a large width, yet be transported from the silage cutting head 112 to the receptacle vehicle body 2 in a relatively narrow stream, with very little or no spillage and with very little damage to the plant material in the silage.

Because the guide surface 164 ends laterally inwardly and closely adjacent the rotary contour of the side cutters 141, the rotary contours 162 of the side cutters can project radially beyond at least a portion of the guide surface 164, rotatable side cutter having a rotary contour with a large diameter can be combined with a guide surface extending relatively closely around the screw conveyor to obtain effective lateral transfer of cut silage.

The rotary contour of the side cutters preferably projects radially beyond at least 75%, and in order of increasing preference at least 80%, 90% or 100% of the extension of guide surface in circumferential sense around the at least one conveyor screw, so that the guide surface can extend closely along the conveyor screw along a large portion of its length.

That the rotary contour of the at least one side cutter projects radially beyond at least a portion of the guide surface, the guide surface ending laterally inwardly and closely adjacent the rotary contour of the at least one side cutter is particularly advantageous in combination with slicing off the silage from frontal face of the silage heap at a relatively small thickness in relation to the depth of the empty space between windings of the conveyor screw. When slicing off silage at a relatively small thickness, the depth over which the side cutter has to operate is relatively small, which is advantageous for keeping the diameter of the rotary contour or contours of the side cutter or side cutters fairly limited.

As is best seen in Fig. 7, the rotary contours 162 of the side cutters 141 project radially beyond an inner surface 144, i.e. a surface facing the conveyor screw 130, of the linear silage cutter 126. Thus, it is ensured that silage that has been sliced off the frontal face of the silage heap is entirely cut loose along its side edge.

The rotary contours 162 of the side cutters 141 do not project until the cutting plane 149 defined by the linear silage cutter 126 and its path of movement, but remain at a slight distance therefrom so that a clearance to the cutting plane is left. Silage that is left along side edges of a slice of silage that is cut off the frontal face of the silage heap is sufficiently flexible to spring back after a limited deflection along the inner surface of the linear cutter 126 and by cutting along a side of the linear cutter 126, a shearing effect can be achieved, so that fraying of the silage that is left behind along an edge of the cutting plane 149 is counteracted.

The side cutters 141 are formed by cutting discs and windings 151 of the conveyor screw 130 connect to lateral inner surfaces 163 of the cutting disks 141. Thus, the cutters 141 also form lateral end plates bounding the chamber in which the conveyor screw 130 is located and provide support for the outer ends of windings 151 of the conveyor screw 130. Because the windings 151 of the conveyor screw 130 connect to lateral inner surfaces 163 of the cutting disks 141, accumulation of silage between the conveyor screw 130 and the lateral outer ends of the chamber is counteracted.

The linear silage cutter 126 has a cutting edge pointing in a cutting direction. The side cutters 141 are drivable in a sense of rotation 145 in which sections of the side cutters 141 most closely adjacent the linear silage cutter 126 moves at least predominantly in the cutting direction, so that the frictional forces exerted by the cutting action press the silage being cut against lower portions of silage still connected to the silage heap. Thus, the silage is not or only to a small extent pulled apart, which is favourable for obtaining a clean cut.

The windings 151 of the screw conveyor 130 have hands of rotation such that silage is transported from the side zones of the cutting head towards the outlet passage 129 when the screw conveyor 130 is rotated in a sense of rotation 145 in which a section of the screw conveyor 130 facing the linear silage cutter 126 moves at least predominantly in the cutting direction. Thus, the conveyor screw 130 is arranged for passing silage towards the outlet underneath the core shaft 155 of the conveyor screw 130 so that the silage is loosened relatively little as it is urged towards the outlet of the chamber in the silage cutting head 112. A further advantage of rotating in a sense of rotation 145 in which a section of the screw conveyor 130 facing the linear silage cutter 126 moves at least predominantly in the cutting direction is, that the sense of rotation is the same as the preferred sense of rotation of the side cutters 141, so that driving the side cutters 141 is facilitated, in particular if, as in the present example, the side cutters 141 are fixed relative to the conveyor screw 130. This fixation also allows a particularly stable support of the ends of the windings 151 which may be fixedly attached to the inner surfaces 163 of the cutting disks 141, for instance by welding or by a releasable connection such as a bolted connection.

When passing the silage to the outlet underneath the core shaft of the conveyor screw, it is of particular advantage to cut a slice of silage that is thinner than the depth of the space between the windings of the conveyor screw, because a thin layer can be deflected and bent from the linear cutter and be passed underneath the core shaft of the conveyor screw with relatively little kneading deformation and loosening of the silage, which is advantageous for storage life of collected silage and counteracting loss of nutritional value.

For a simple construction, in particular for driving the rotation of the side cutters, 141, it is advantageous that the side cutters are rotatable about an axis of rotation coaxial with the axis of rotation of the conveyor screw 130.

According to the present example, the screw conveyor 130 has transport paddles 146, 150 located between the windings 151 of the screw conveyor 130 in a zone which, in the longitudinal direction 138 of the entry passage 127, is located between lateral boundaries of the outlet passage 129. The transport paddles 146, 150 effectively urge silage out of the space between the windings of the treads of the screw conveyor 130 and onto the silage conveyor 113 that extends in longitudinal direction of the boom 111 at the end of which the silage cutting head 112 is mounted. Thus, the silage that has reached the zone of the silage cutting head 112 in front of the outlet passage 129 is effectively urged in tangential direction out of the silage cutting head and transferred onto the silage conveyor 113. One of the paddles 150 is of a flexible material, preferably rubber or in the form of a brush and projects slightly beyond the axial contour of the windings of the screw conveyor 130, so that it sweeps along an internal circumferential surface of the cutting head, thereby effectively clearing the zone of the outlet passage 129 from silage.

As is best seen in in Fig. 6, at the outer ends of the screw conveyor 130 the side cutters form end plates joining the threads 151 of the screw conveyor 130.

The silage conveyor 113 has dogs 147 for avoiding that silage slips down in or against the silage direction when the boom 111 is in an inclined orientation (see Fig. 7). In operation, preferably the circumferential velocity of the silage paddles 146 matches the velocity at which the dogs 147 are displaced, so that driving movement of the silage is smoothly taken over from the paddles 146 by the silage conveyor 113 with the dogs 147.

For effectively driving displacement of the silage while avoiding damaging the plant material in the silage (which reduces its nutritious contents and storage life), the screw conveyor preferably rotates at most at 75 rpm and more preferably at less than 60 rpm, while the silage conveyor preferably moves at a speed higher, and more preferably at least 25% higher than the circumferential velocity of the screw conveyor.

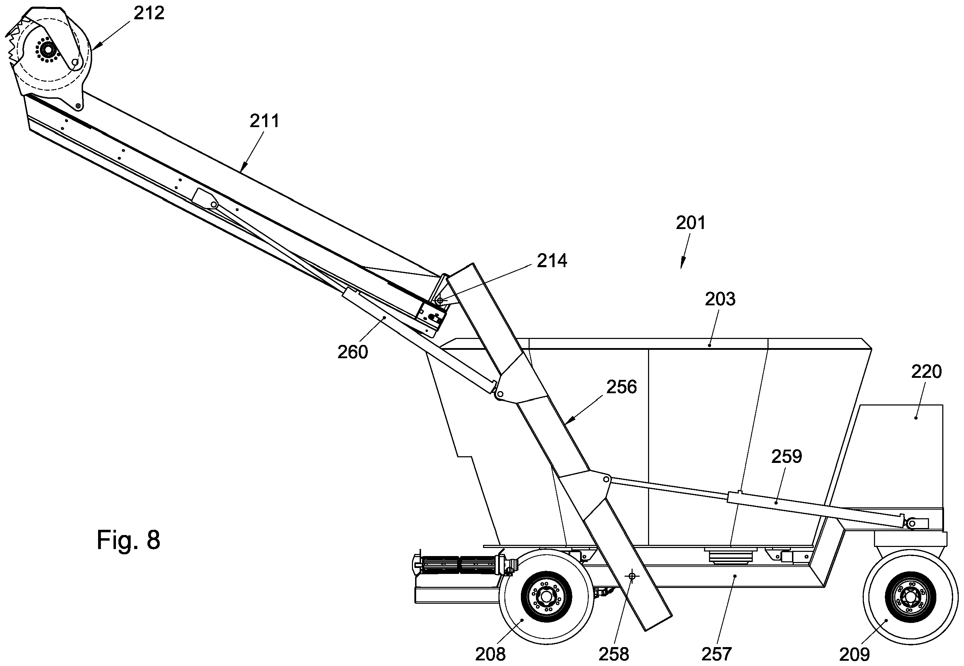

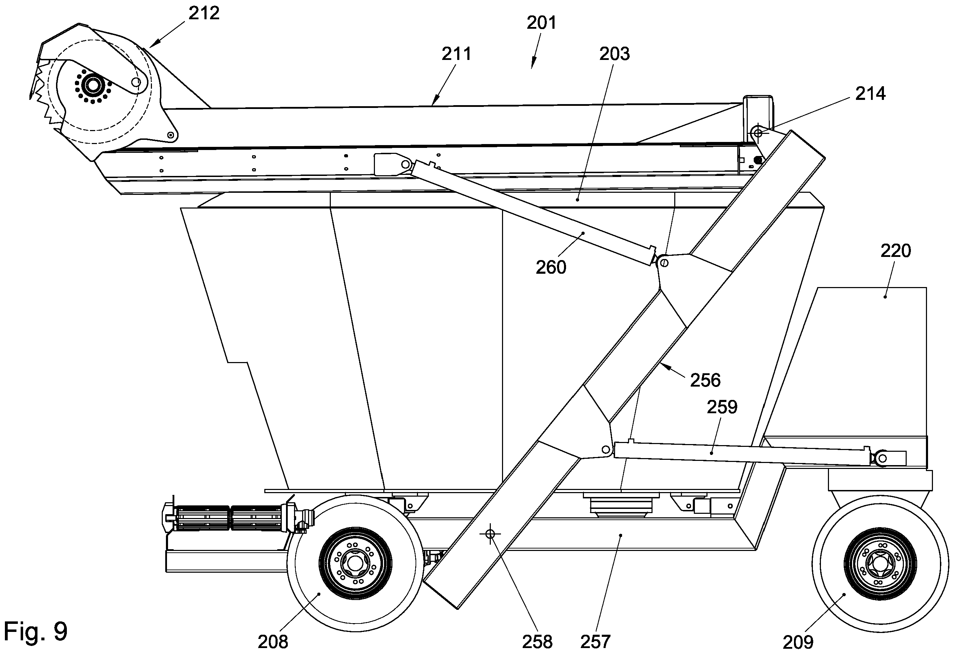

Figs. 8 and 9 show a third example of a silage transport vehicle 201 according to the invention in different operating conditions. The vehicle has a motor and drive train unit 220 mounted to a chassis 257 of the vehicle body.

In Fig. 8 the boom 211 at the end of which a silage cutting head 212 is mounted is in an operating position for cutting and collecting silage from a heap while in Fig. 9, the boom 211 is in a retracted position for driving between the silage heap and locations where silage and optionally other feed is to be delivered. To allow the boom 211 to be moved between the silage collecting position shown in Fig. 8 and the transport position shown in Fig. 9, the boom is pivotably suspended from a boom carrier 256. The boom 211 is pivotable relative to the boom carrier 256 about a pivoting axis 214 which is movable back and forth in driving directions of the vehicle 201 as determined by its wheels 208, 209 between a silage collecting position at an upper front end of the vehicle as shown in Fig. 8 and a transport position an upper rear end of the vehicle as shown in Fig. 9. With the boom pivoting axis 214 in its rearmost portion, the boom 211 extends over substantially the length of the vehicle 201 over the receptacle 203 and projects very little from the vehicle chassis 257 and the receptacle 203 carried thereby. Accordingly, with the boom 211 in the transport position, the vehicle 211 has a relatively short footprint and is easily manoeuvrable even in confined spaces.

The forward and backward movability of the pivoting axis 214 about which the boom 211 is pivotable can also be used to influence the shape of the front face of the silage heap formed during cutting and collecting of silage without moving the entire vehicle 201 backward and/or forward as the boom 211 with the cutting head 212 is swung in a vertical plane during cutting and collecting of silage. By slightly moving the pivoting axis 214 backward from its most forward position as the cutting head 212 is moved downwardly from a most upward position, it can be avoided that, after cutting, an upper portion of the frontal face of the silage heap leans forward while moving the pivoting axis forwardly (i.e. towards the silage heap) as the cutting head 212 is moved downwardly from an approximately horizontal orientation allows to obtain a more straight frontal face that does not or to a lesser extent increasingly slant backward towards its bottom end.

In the present example, the forward and backward movability of the pivoting axis 214 has been achieved by providing that the boom carrier 256 is pivotably mounted to the vehicle body and in this example more specifically to the chassis 257. The boom carrier 256 is pivotable about an axis 258 where the boom carrier 256 is coupled to the chassis 257, so that an efficient low friction construction is achieved. However, also other solutions for providing the forward and backward movability of the pivoting axis of the boom 211 are conceivable, for instance a solution in which the boom is pivotably connected to a traveller that can be moved forward and backward along rails extending in longitudinal direction of the vehicle.

For moving the boom carrier 256 backward and forward, hydraulic cylinders 259 coupled to the vehicle body and to the boom carrier 256 in positions spaced from the pivoting axis 258 of the boom carrier 256 are provided. For pivoting the boom 211 up and down and in and out of its transport position, hydraulic cylinders 260 coupled to the boom 211 and to the boom carrier 256 in positions spaced from the pivoting axis 214 of the boom 211 are provided.

Several features have been described as part of the same or separate embodiments. However, it will be appreciated that the scope of the invention also includes embodiments having combinations of all or some of these features other than the specific combinations of features embodied in the examples. In particular, the feature that the linear silage cutter and the longitudinal edge are positioned such that the longitudinal edge is at a distance from the cutting plane, which is smaller than the depth, the distance determining the thickness at which the silage is sliced from the heap, may also be combined with other aspects of the cutting heads describe above.

## Claims

1. A silage cutting head for cutting silage from a heap (23; 123), comprising:
a linear silage cutter (26; 126; 326; 426; 526) extending in a longitudinal direction for cutting off silage from the heap along at least one linear cut in said longitudinal direction, the silage cutter (26; 126; 326; 426; 526) bounding at least a longitudinal side of an entry passage (127) for allowing silage cut off the heap by the linear silage cutter (26; 126; 326; 426; 526) to pass through, said entry passage (127) being elongate in said longitudinal direction and having a width in said longitudinal direction;
an outlet passage (29; 129), said outlet passage (29; 129) having a width in said longitudinal direction, which is smaller than the width of said entry passage (127);
at least one conveyor screw (30; 130) having an axis of rotation oriented in said longitudinal direction, the at least one conveyor screw (30; 130) extending at least in a side zone (31) of the cutting head (12; 112; 212) aside of an outlet zone of the cutting head in front of the outlet passage (29; 129), for laterally transporting at least portions of the cut silage (152) from the at least one side zone (31) of said cutting head towards said outlet passage (29; 129);
at least one side cutter (141) at a lateral outer end of the entry passage (127), rotatable about an axis of rotation parallel to the axis of rotation of the at least one conveyor screw (30; 130) and defining a rotary contour of radially and laterally most outermost portions of said at least one side cutter (141);
a guide surface (164) extending around a section of the at least one conveyor screw (30; 130), leaving a space between the guide surface (164) and a rotary contour of the at least one screw conveyor (30; 130);
**characterized in that** the guide surface (164) ends laterally inwardly and closely adjacent the rotary contour of the at least one side cutter (141) and **in that** the rotary contour of the at least one side cutter (141) projects radially beyond at least a portion of the guide surface (164).

2. A silage cutting head according to claim 1, wherein the side cutter (141) is formed by a cutting disc and wherein a winding (151) of the at least one conveyor screw (30; 130) connects to a lateral inner surface (163) of the cutting disk (141).

3. A silage cutting head according to claim 1 or 2, wherein the linear silage cutter (26; 126; 326; 426; 526) has a cutting edge pointing in a cutting direction, wherein the at least one side cutter (141) is drivable in a sense of rotation (145) in which a section of the at least one side cutter (141) most closely adjacent the linear silage cutter (26; 126; 326; 426; 526) moves at least predominantly in the cutting direction.

4. A silage cutting head according to claim 3, wherein the windings (151) of the at least one screw conveyor (130) have a hand or hands of rotation such that silage is transported from the at least one side zone (31) of said cutting head towards said outlet passage (29; 129) when the at least one screw conveyor (130) is rotated in a sense of rotation (145) in which a section of the at least one screw conveyor (130) facing the linear silage cutter (26; 126; 326; 426; 526) moves at least predominantly in the cutting direction.

5. A silage cutting head according to any one of the preceding claims, wherein the at least one side cutter (141) is rotatable about an axis of rotation coaxial with the axis of rotation of the at least one conveyor screw (30; 130).

6. A silage cutting head according to any one of the preceding claims, wherein the at least one side cutter (141) is fixed relative to the at least one conveyor screw (30; 130).

7. A silage cutting head according to any one of the preceding claims, wherein the rotary contour of the at least one side cutter (141) projects radially beyond at least 75% of the extension of guide surface (164) in circumferential sense around the at least one conveyor screw (30; 130).

8. A silage cutting head according to any one of the preceding claims, wherein the rotary contour of the at least one side cutter (141) projects radially beyond an inner surface (144) of the linear silage cutter (26; 126; 326; 426; 526).

9. A silage cutting head according to claim 8, wherein the rotary contour (162) of the at least one side cutter (141) leave a radial clearance to a cutting plane (149) defined by the linear silage cutter (126) and its path of movement.

10. A silage cutting head according to any of the preceding claims, wherein the linear silage cutter (126) has a deflecting surface (144) facing the at least one conveyor screw (30; 130) and oriented at an angle of deflection of at least 25° relative to an adjacent surface portion of the linear silage cutter (126) between the deflecting surface and the cutting edge for, in operation, deflecting sliced silage towards the screw conveyor (130) and wherein the rotary contour of the at least one side cutter (141) projects radially beyond the deflecting surface (144).

11. A silage cutting head according to any of the preceding claims, wherein the at least one screw conveyor (130) has a hand or hands of rotation such that silage is transported from the at least one side zone (31) of said cutting head towards said outlet passage (29; 129) when the at least one screw conveyor (130) is rotated in a sense of rotation in which a section of the at least one screw conveyor (130) facing the linear silage cutter (26; 126; 326; 426; 526) moves at least predominantly in the cutting direction and wherein at least along a feed in portion (34; 134) of the guide surface (164) extending from a longitudinal edge (35; 135) of the entry passage (127) opposite the linear silage cutter (26; 126; 326; 426; 526), in axial view, the space (136) between the feed in surface (34; 134) and an outer rotary contour of the screw conveyor (30; 130) tapers from large to small in a circumferential sense away from the longitudinal edge (35; 135) of the entry passage (127).

12. A silage collector including a cutting head according to any of the preceding claims, further comprising a boom (11; 111; 211) having a proximal end pivotably mountable to a silage transport vehicle body (2; 102) and a distal end at which the silage cutting head is mounted, a silage conveyor extending along the boom (11; 111; 211) for transporting silage lying thereon from said outlet passage (29; 129) to the proximal end of the boom (11; 111; 211).

13. A silage transport vehicle comprising:
a vehicle body (2; 102) with a receptacle for receiving and holding silage to be transported; and
a silage collector according to claim 12 of which the boom (11; 111; 211) is pivotably mounted to the vehicle body (2; 102).

## Patentansprüche

1. Silageschneidkopf zum Schneiden von Silage von einem Haufen (23; 123), umfassend:
einen linearen Silageschneider (26; 126; 326; 426; 526), verlaufend in einer Längsrichtung zum Abschneiden von Silage von dem Haufen entlang mindestens eines linearen Schnitts in der Längsrichtung, welcher Silageschneider (26; 126; 326; 426; 526) mindestens eine Längsseite eines Eintrittsdurchgangs (127) begrenzt, um es Silage, abgeschnitten von dem Haufen durch den linearen Silageschneider (26; 126; 326; 426; 526), zu ermöglichen, den Eintrittsdurchgang (127), der lang gestreckt in der Längsrichtung ist und eine Breite in der Längsrichtung hat, zu passieren;
einen Austrittsdurchgang (29; 129), welcher Austrittsdurchgang (29; 129) eine Breite in der Längsrichtung hat, die kleiner als die Breite des Eintrittsdurchgangs (127) ist;
mindestens eine Förderschnecke (30; 130) mit einer Drehachse, ausgerichtet in der Längsrichtung, welche mindestens eine Förderschnecke (30; 130) mindestens in einer Seitenzone (31) des Schneidkopfs (12; 112; 212) neben einer Austrittszone des Schneidkopfs vor dem Austrittsdurchgang (29; 129) verläuft, um mindestens Teile der abgeschnittenen Silage (152) lateral von der mindestens einen Seitenzone (31) des Schneidkopfes zu dem Austrittsdurchgang (29; 129) zu transportieren;
mindestens einen Seitenschneider (141) an einem lateralen äußeren Ende des Eintrittsdurchgangs (127), drehbar um eine Drehachse, die parallel zu der Drehachse der mindestens einen Förderschnecke (30; 130) ist und eine drehende Kontur von radial und lateral äußersten Teilen des mindestens einen Seitenschneiders (141) definiert;
eine Führungsoberfläche (164), die um einen Abschnitt der mindestens einen Förderschnecke (30; 130) verläuft und einen Platz zwischen der Führungsoberfläche (164) und einer drehenden Kontur des mindestens einen Schneckenförderers (30; 130) lässt;
**dadurch gekennzeichnet, dass** die Führungsoberfläche (164) lateral einwärts und nahe neben der drehenden Kontur des mindestens einen Seitenschneiders (141) endet und dass die drehende Kontur des mindestens einen Seitenschneiders (141) radial über mindestens einen Teil der Führungsoberfläche (164) hinausragt.

2. Silageschneidkopf nach Anspruch 1, wobei der Seitenschneider (141) von einer Schneidscheibe gebildet wird und wobei eine Windung (151) der mindestens einen Förderschnecke (30; 130) mit einer lateralen Innenfläche (163) der Schneidscheibe (141) verbunden ist.

3. Silageschneidkopf nach Anspruch 1 oder 2, wobei der lineare Silageschneider (26; 126; 326; 426; 526) eine Schneidkante hat, die in eine Schneidrichtung zeigt, wobei der mindestens eine Seitenschneider (141) in eine Drehrichtung (145) antreibbar ist, in der sich ein Abschnitt des mindestens einen Seitenschneiders (141), der am dichtesten neben dem linearen Silageschneider (26; 126; 326; 426; 526) ist, sich mindestens vorwiegend in die Schneidrichtung bewegt.

4. Silageschneidkopf nach Anspruch 3, wobei die Windungen (151) des mindestens einen Schneckenförderers (130) eine derartige Drehrichtung oder Drehrichtungen haben, dass die Silage von der mindestens einen Seitenzone (31) des Schneidkopfes zu dem Austrittsdurchgang (29; 129) transportiert wird, wenn der mindestens eine Schneckenförderer (130) in eine Drehrichtung (145) gedreht wird, in der ein Abschnitt des mindestens einen Schneckenförderers (130), der dem linearen Silageschneider (26; 126; 326; 426; 526) gegenüber liegt, sich vorwiegend in die Schneidrichtung bewegt.

5. Silageschneidkopf nach einem der vorhergehenden Ansprüche, wobei der mindestens eine Seitenschneider (141) um eine Drehachse, die koaxial zu der Drehachse der mindestens einen Förderschnecke (30; 130) ist, drehbar ist.

6. Silageschneidkopf nach einem der vorhergehenden Ansprüche, wobei der mindestens eine Seitenschneider (141) in Bezug auf die mindestens eine Förderschnecke (30; 130) fixiert ist.

7. Silageschneidkopf nach einem der vorhergehenden Ansprüche, wobei die drehende Kontur des mindestens einen Seitenschneiders (141) radial über mindestens 75 % der Erstreckung der Führungsoberfläche (164) in Umfangsrichtung um die mindestens eine Förderschnecke (30; 130) hinausragt.

8. Silageschneidkopf nach einem der vorhergehenden Ansprüche, wobei die drehende Kontur des mindestens einen Seitenschneiders (141) radial über eine Innenfläche (144) des linearen Silageschneiders (26; 126; 326; 426; 526) hinausragt.

9. Silageschneidkopf nach Anspruch 8, wobei die drehende Kontur (162) des mindestens einen Seitenschneiders (141) einen radialen Abstand zu einer Schneidebene (149), die von dem linearen Silageschneider (126) und seinem Bewegungsweg definiert wird, lässt.

10. Silageschneidkopf nach einem der vorhergehenden Ansprüche, wobei der lineare Silageschneider (126) eine Ablenkfläche (144) hat, die gegenüber der mindestens einen Förderschnecke (30; 130) ist und in einem Ablenkwinkel von mindestens 25° in Bezug auf einen angrenzenden Oberflächenteil des linearen Silageschneiders (126) zwischen der Ablenkfläche und der Schneidkante ausgerichtet ist, um, bei Betrieb, die geschnittene Silage zu dem Schneckenförderer (130) abzulenken, und wobei die drehende Kontur des mindestens einen Seitenschneiders (141) radial über die Ablenkfläche (144) hinausragt.

11. Silageschneidkopf nach einem der vorhergehenden Ansprüche, wobei der mindestens eine Schneckenförderer (130) eine derartige Drehrichtung oder Drehrichtungen hat, dass Silage von der mindestens einen Seitenzone (31) des Schneidkopfes zu dem Austrittsdurchgang (29; 129) transportiert wird, wenn der mindestens eine Schneckenförderer (130) in eine Drehrichtung gedreht wird, in der ein Abschnitt des mindestens einen Schneckenförderers (130), der dem linearen Silageschneider (26; 126; 326; 426; 526) gegenüber liegt, sich mindestens vorwiegend in die Schneidrichtung bewegt, und wobei mindestens entlang eines Zufuhrteils (34; 134) der Führungsoberfläche (164), der von einer Längskante (35; 135) des Eintrittsdurchgangs (127) gegenüber dem linearen Silageschneider (26; 126; 326; 426; 526) verläuft, in axialer Ansicht der Raum (136) zwischen der Zufuhrfläche (34; 134) und einer äußeren drehenden Kontur des Schneckenförderers (30; 130), sich von groß zu klein in eine Umfangsrichtung weg von der Längskante (35; 135) des Eintrittsdurchgangs (127) zuspitzt.

12. Silagekollektor, einschließlich eines Schneidkopfes nach einem der vorhergehenden Ansprüche, ferner umfassend einen Ausleger (11; 111; 211) mit einem proximalen Ende, das drehbar an einem Silagetransportfahrzeugkörper (2; 102) montierbar ist, und einem distalen Ende, an dem der Silageschneidkopf montiert ist, einen Silageförderer, der entlang des Auslegers (11; 111; 211) verläuft, um darauf liegende Silage von dem Austrittsdurchgang (29; 129) zu dem proximalen Ende des Auslegers (11; 111; 211) zu transportieren.

13. Silagetransportfahrzeug, umfassend:
einen Fahrzeugkörper (2; 102) mit einem Behältnis zum Aufnehmen und Halten von zu transportierender Silage; und
einen Silagekollektor nach Anspruch 12, dessen Ausleger (11; 111; 211) drehbar an dem Fahrzeugkörper (2; 102) montiert ist.

## Revendications

1. Tête de coupe d'ensilage pour couper l'ensilage d'une meule (23 ; 123) comprenant :
un dispositif de coupe d'ensilage linéaire (26; 126; 326; 426; 526) s'étendant dans une direction longitudinale pour couper l'ensilage de la meule le long d'au moins une coupe linéaire dans ladite direction longitudinale, le dispositif de coupe d'ensilage (26; 126; 326; 426; 526) délimitant au moins un côté longitudinal d'un passage d'entrée (127) pour permettre à l'ensilage coupé de la meule par le dispositif de coupe d'ensilage linéaire (26 ; 126 ; 326 ; 426 ; 526) de passer à travers, ledit passage d'entrée (127) étant allongé dans ladite direction longitudinale et ayant une largeur dans ladite direction longitudinale ;
un passage de sortie (29 ; 129), ledit passage de sortie (29 ; 129) ayant une largeur dans ladite direction longitudinale, qui est inférieure à la largeur dudit passage d'entrée (127) ;
au moins une vis de transporteur (30 ; 130) ayant un axe de rotation orienté dans ladite direction longitudinale, la au moins une vis de transporteur (30 ; 130) s'étendant au moins dans une zone latérale (31) de la tête de coupe (12 ; 112 ; 212) à côté d'une zone de sortie de la tête de coupe en face du passage de sortie (29 ; 129), pour transporter latéralement au moins des parties d'ensilage coupé (152) de la au moins une zone latérale (31) de ladite tête de coupe vers ledit passage de sortie (29 ; 129) ;
au moins un dispositif de coupe latéral (141) au niveau d'une extrémité externe latérale du passage d'entrée (127), pouvant tourner autour d'un axe de rotation parallèle à l'axe de rotation d'au moins une vis de transporteur (30 ; 130) et définissant un contour rotatif des parties situées radialement et latéralement le plus à l'extérieur dudit au moins un dispositif de coupe latéral (141) ;
une surface de guidage (164) s'étendant autour d'une section de la au moins une vis de transporteur (30 ; 130), ménageant un espace entre la surface de guidage (164) et un contour rotatif du au moins un transporteur à vis (30 ; 130) ;
**caractérisée en ce que** la surface de guidage (164) se termine latéralement vers l'intérieur et à proximité adjacente du contour rotatif du au moins un dispositif de coupe latéral (141) et **en ce que** le contour rotatif du au moins un dispositif de coupe latéral (141) fait saillie radialement au-delà d'au moins une partie de la surface de guidage (164).

2. Tête de coupe d'ensilage selon la revendication 1, dans laquelle le dispositif de coupe latéral (141) est formé par un disque de coupe et dans lequel un enroulement (151) de la au moins une vis de transporteur (30; 130) se raccorde à une surface interne latérale (163) du disque de coupe (141).

3. Tête de coupe d'ensilage selon la revendication 1 ou 2, dans laquelle le dispositif de coupe d'ensilage linéaire (26 ; 126 ; 326 ; 426 ; 526) a un bord de coupe pointant dans une direction de coupe, dans laquelle le au moins un dispositif de coupe latéral (141) peut être entraîné dans un sens de rotation (145) dans lequel une section du au moins un dispositif de coupe latéral (141) le plus étroitement adjacent au dispositif de coupe d'ensilage linéaire (26 ; 126 ; 326 ; 426 ; 526) se déplace de manière au moins prédominante dans la direction de coupe.

4. Tête de coupe d'ensilage selon la revendication 3, dans laquelle les enroulements (151) du au moins un transporteur à vis (130) ont un sens ou des sens de coupe de sorte que l'ensilage est transporté de la au moins une zone latérale (31) de ladite tête de coupe vers ledit passage de sortie (29 ; 129) lorsque le au moins un transporteur à vis (130) tourne dans un sens de rotation (145) dans lequel une section du au moins un transporteur à vis (130) faisant face au dispositif de coupe d'ensilage linéaire (26 ; 126 ; 326 ; 426 ; 526) se déplace de manière au moins prédominante dans la direction de coupe.

5. Tête de coupe d'ensilage selon l'une quelconque des revendications précédentes, dans laquelle le au moins un dispositif de coupe latéral (141) peut tourner autour d'un axe de rotation coaxial par rapport à l'axe de rotation de la au moins une vis de transporteur (30 ; 130).

6. Tête de coupe d'ensilage selon l'une quelconque des revendications précédentes, dans laquelle le au moins un dispositif de coupe latéral (141) est fixe par rapport à la au moins une vis de transporteur (30 ; 130).

7. Tête de coupe d'ensilage selon l'une quelconque des revendications précédentes, dans lequel le contour rotatif du au moins un dispositif de coupe latéral (141) fait saillie radialement au-delà d'au moins 75% de l'extension de la surface de guidage (164) dans le sens circonférentiel autour de la au moins une vis de transporteur (30 ; 130).

8. Tête de coupe d'ensilage selon l'une quelconque des revendications précédentes, dans laquelle le contour rotatif du au moins un dispositif de coupe latéral (141) fait saillie radialement au-delà d'une surface interne (144) du dispositif de coupe d'ensilage linéaire (26 ; 126 ; 326 ; 426 ; 526).

9. Tête de coupe d'ensilage selon la revendication 8, dans laquelle le contour rotatif (162) du au moins un dispositif de coupe latéral (141) laisse un jeu radial dans un plan de coupe (149) défini par le dispositif de coupe d'ensilage linéaire (126) et sa trajectoire de déplacement.

10. Tête de coupe d'ensilage selon l'une quelconque des revendications précédentes, dans laquelle le dispositif de coupe d'ensilage linéaire (126) a une surface de déviation (144) faisant face à la au moins une vis de transporteur (30 ; 130) et orientée à un angle de déviation d'au moins 25° par rapport à une partie de surface adjacente du dispositif de coupe d'ensilage linéaire (126) entre la surface de déviation et le bord de coupe, en fonctionnement, pour dévier l'ensilage coupé vers le transporteur à vis (130) et dans laquelle le contour rotatif du au moins un dispositif de coupe latéral (141) fait saillie radialement au-delà de la surface de déviation (144).

11. Tête de coupe d'ensilage selon l'une quelconque des revendications précédentes, dans laquelle le au moins un transporteur à vis (130) a un sens ou des sens de rotation de sorte que l'ensilage est transporté de la au moins une zone latérale (31) de ladite tête de coupe vers ledit passage de sortie (29 ; 129) lorsque le au moins un transporteur à vis (130) tourne dans un sens de rotation dans lequel une section du au moins un transporteur à vis (130) faisant face au dispositif de coupe d'ensilage linéaire (26 ; 126 ; 326 ; 426 ; 526) se déplace de manière au moins prédominante dans la direction de coupe et dans lequel au moins le long d'une alimentation en portion (34 ; 134) de la surface de guidage (164) s'étendant à partir d'un bord longitudinal (35; 135) du passage d'entrée (127) opposé au dispositif de coupe d'ensilage linéaire (26 ; 126 ; 326 ; 426 ; 526), sur une vue axiale, l'espace (136) entre l'alimentation en surface (34 ; 134) et un contour rotatif externe du transporteur à vis (30 ; 130) se rétrécit progressivement, passant de grand à petit, dans un sens circonférentiel à distance du bord longitudinal (35 ; 135) du passage d'entrée (127).

12. Collecteur d'ensilage comprenant une tête de coupe selon l'une quelconque des revendications précédentes, comprenant en outre une flèche (11 ; 111 ; 211) ayant une extrémité proximale pouvant être montée de manière pivotante sur un corps de véhicule de transport d'ensilage (2 ; 102) et une extrémité distale sur laquelle la tête de coupe d'ensilage est montée, un transporteur d'ensilage s'étendant le long de la flèche (11 ; 111 ; 211) pour transporter l'ensilage qui est sur ce dernier, dudit passage de sortie (29 ; 129) à l'extrémité proximale de la flèche (11 ; 111 ; 211).

13. Véhicule de transport d'ensilage comprenant :
un corps de véhicule (2 ; 102) avec un réceptacle pour recevoir et contenir l'ensilage à transporter ; et
un collecteur d'ensilage selon la revendication 12, dont la flèche (11 ; 111 ; 211) est montée de manière pivotante sur le corps de véhicule (2 ; 102).
